Europäisches Patentamt

European Patent Office

Office européen des brevets

(11) Numéro de publication: **0 235 034**

**A1**

# (12) DEMANDE DE BREVET EUROPEEN

(21) Numéro de dépôt: 87400367.6

(22) Date de dépôt: 19.02.87

(51) Int. Cl.³: **G 01 S 17/32**
**G 01 S 17/58**

(30) Priorité: 24.02.86 FR 8602515

(43) Date de publication de la demande:
02.09.87 Bulletin 87/36

(84) Etats contractants désignés:
AT BE CH DE ES FR GB IT LI LU NL SE

(71) Demandeur: **ELECTRICITE DE FRANCE Service National**
**2, rue Louis Murat**
**F-75008 Paris(FR)**

(72) Inventeur: **Gerardin, Jean-Pierre**
**122, rue de Sartrouville**
**F-92000 Nanterre(FR)**

(74) Mandataire: **Moncheny, Michel et al,**
**c/o Cabinet Lavoix 2 Place d'Estienne d'Orves**
**F-75441 Paris Cedex 09(FR)**

(54) **Procédé et dispositif de mesure optique de la distance et de la vitesse d'une cible.**

(57) Procédé qui consiste à envoyer vers la cible un rayonnement, de longueur d'onde périodiquement variable, à partir d'une source monomode de lumière cohérente (18) alimentée par un signal de puissance variable, placée audit point, à recueillir le rayonnement rétrodiffusé par la cible, le réinjecter dans la cavité de la source de lumière et à recueillir sur un photo-détecteur (19) placé à l'arrière de la source le battement entre ce rayonnement rétrodifusé et le rayonnement issu de la source, battement dont la fréquence proportionnelle au retard de l'onde rétrodiffusée est représentatif de la distance entre la source et la cible.

FIG.6

Croydon Printing Company Ltd

EP 0 235 034 A1

La présente invention est relative aux dispositifs optiques de télémétrie et se rapporte plus particulièrement aux dispositifs optiques de télémétrie susceptibles de mesurer des distances de l'ordre de quelques centimètres à quelques mètres.

Le domaine d'application de tels dispositifs réside dans les mesures dimensionnelles dans des endroits difficilement accessibles tels que les générateurs de vapeur ou encore dans l'appréhension de l'environnement pour les systèmes robotiques, en particulier pour les robots mobiles d'intervention.

Parmi les dispositifs de télémesure connus utilisés jusqu'à présent pour de telles applications, on peut citer les télémétres à ultrasons dont l'inconvénient principal réside dans leur grande ouverture de champ et leur sensibilité aux échos parasites qui empêchent de faire des mesures dans un environnement encombré tel qu'un faisceau de tubes, des grilles ou analogues.

On connait également des télémètres optiques à triangulation qui pour être précis, nécessitent une base large, ce qui constitue églement un obstacle pour des mesures en milieu encombré.

De plus, le système de superposition des faisceaux mis en oeuvre pour former les côtés du triangle est optiquement complexe.

On connait également les télémètres optiques à temps de vol, à l'aide desquels on mesure le temps écoulé entre l'émission et la réception d'une impulsion de lumière. Compte tenu de la vitesse de la lumière, la résolution de ces dispositifs est faible (de l'ordre de plusieurs dizaines de centimètres) et par là-même, la mesure des courtes distances est rendue difficile. De plus, l'objet doit en général être coopératif en ce sens qu'il doit être rétroréflecteur.

Les télémètres optiques à mesurer de déphasages mesurent le retard de phase entre la modulation de la lumière émise et celle reçue en écho.

La difficulté de la mesure réside dans le fait que pour obtenir une bonne précision à de courtes distances, on doit procéder à une modulation très fine. En outre, comme dans le cas des télémètres optiques à temps de vol, la cible doit être le plus souvent coopérative.

L'invention vise à remédier aux inconvénients des dispositifs optiques de télémesure connus, en créant un dispositif à champ étroit susceptible de permettre des mesures sur un axe très fin, qui ne nécessite pas de cible spécialement équipée pour être coopérative et qui fasse appel à des moyens électroniques d'exploitation simples.

Elle a donc pour objet un procédé de mesure optique de la distance entre une cible et un point déterminé, caractérisé en ce qu'il consiste à envoyer vers la cible un rayonnement, de longueur d'onde périodiquement variable, à partir d'une source monomode de lumière cohérente alimentée par un signal de puissance variable, placée audit point, à recueillir le rayonnement rétrodiffusé par la cible, le réinjecter dans la cavité de la source de lumière et à recueillir sur un photo-détecteur placé à l'arrière de la source de battement entre ce rayonnement rétrodiffusé et le rayonnement issu de la souce, battement dont la fréquence proportionnelle au retard de l'onde rétrodiffusée est représentatif de la distance entre la source et la cible.

L'invention a également pour objet un dispositif de mesure optique de la distance d'une cible

3

destiné à la mise en oeuvre du procédé défini ci-dessus, caractérisé en ce qu'il comprend une source monomode de lumière cohérente destinée à émettre un rayonnement de lumière cohérente vers la cible, des moyens pour faire varier périodiquement la longueur d'onde de la lumière de ladite source, un photo-détecteur destiné à détecter le décalage de longueur d'onde entre la lumière issue de la source et celle rétro-diffusée par la cible et des moyens pour réinjecter la lumière rétrodiffusée dans la cavité de la source de lumière cohérente et des moyens pour réinjecter la lumière rétrodiffusée dans la cavité de la source de lumière cohérente et du moyen pour recueillir sur le photo-détecteur un signal composite issu de ladite cavité et dont la fréquence est représentative de la distance entre la source et la cible.

L'invention sera mieux comprise à l'aide de la description qui va suivre, donnée uniquement à titre d'exemple et faite en se référant aux dessins annexés, sur lesquels :

- la Fig.1 est un schéma de principe d'un vibromètre à diode laser classique;

- la Fig.2 est un diagramme en fonction du temps de la longueur d'onde d'émission de la diode laser du vibromètre de la Fig.1;

- la Fig.3 est un schéma de principe d'un mode de réalisation préféré de télémètre à diode laser suivant l'invention;

- la Fig.4 est un diagramme en fonction du temps du signal issu de la photodiode de contrôle du télémètre de la Fig.3;

- la Fig.5 est un schéma synoptique d'un circuit de commande et de traitement des signaux d'un

4

vibromètre mettant en oeuvre l'invention;

    - la Fig.6 est un schéma synoptique complet du circuit de commande et de traitement d'un télémètre suivant l'invention; et

    - les Fig.7a à 7d sont des diagrammes de signaux apparaissant en divers points du circuit de la Fig.6.

    - la Fig.8 est un diagramme en fonction du temps montrant la variation de la fréquence du signal recueilli après rétrodiffusion par la cible;

    - la Fig.9 montre deux diagrammes correspondant à celui de Fig. 8 obtenus respectivement avec des signaux de modulation à pente montante et descendante;

    - la Fig. 10 est un diagramme des signaux de distance entre source et cible obtenus à la sortie du télémètre de la Fig. 6 en réponse à des signaux modulés par des rampes montantes et par des rampes descendantes;

    - la Fig. 11 est une variante du circuit de la Fig. 6 destiné à assurer des mesures de distance en tenant compte des déplacements de la cible par rapport à la source; et

    - la Fig.12 est une variante du circuit de la Fig.5 destinée à mesurer la distance entre une source et une cible ainsi que la vitesse de la cible par rapport à la source.

    Les vibromètres sont généralement réalisés d'après le schéma de principe de l'interféromètre de Michelson qui comporte un laser dont le rayonnement lumineux est émis par une voie de mesure comprenant deux miroirs semi-réfléchissant et une optique de collimation, vers une cible 6.

    Une partie de la lumière émise par le laser 1 est réfléchie par un premier miroir semi-réflichis-

5

sant, et modulée dans un modulateur pour être appliquée, avec la lumière réfléchie par la cible par l'intermédiaire d'un second miroir semi-réfléchissant à un détecteur de lumière.

Le photodétecteur assure la comparaison de la fréquence de la lumière issue du laser et passant par la voie de référence constituée par le premier miroir semi-réfléchissant, le modulateur et le second miroir semi-réfléchissant à la fréquence de la lumière réfléchie par la cible par mélange des deux faisceaux sur sa surface sensible.

La fréquence du signal recueilli est proportionnelle à la vitesse de déplacement de la cible.

Pour obtenir une information relative au sens de déplacement de la cible, il faut que les deux faisceaux soient décalés en fréquence l'un par rapport à l'autre.

En l'absence de mouvement relatif entre la cible et le laser, on détecte ce décalage de fréquence et celui-ci augmente ou diminue suivant que la cible s'éloigne ou se rapproche.

Parmi les divers moyens pour créer ce décalage, on peut citer les réseaux tournants et les modulateurs acousto-optiques.

Aucun n'est vraiment facile à mettre en oeuvre. De plus, le montage optique occupe une place relativement importante.

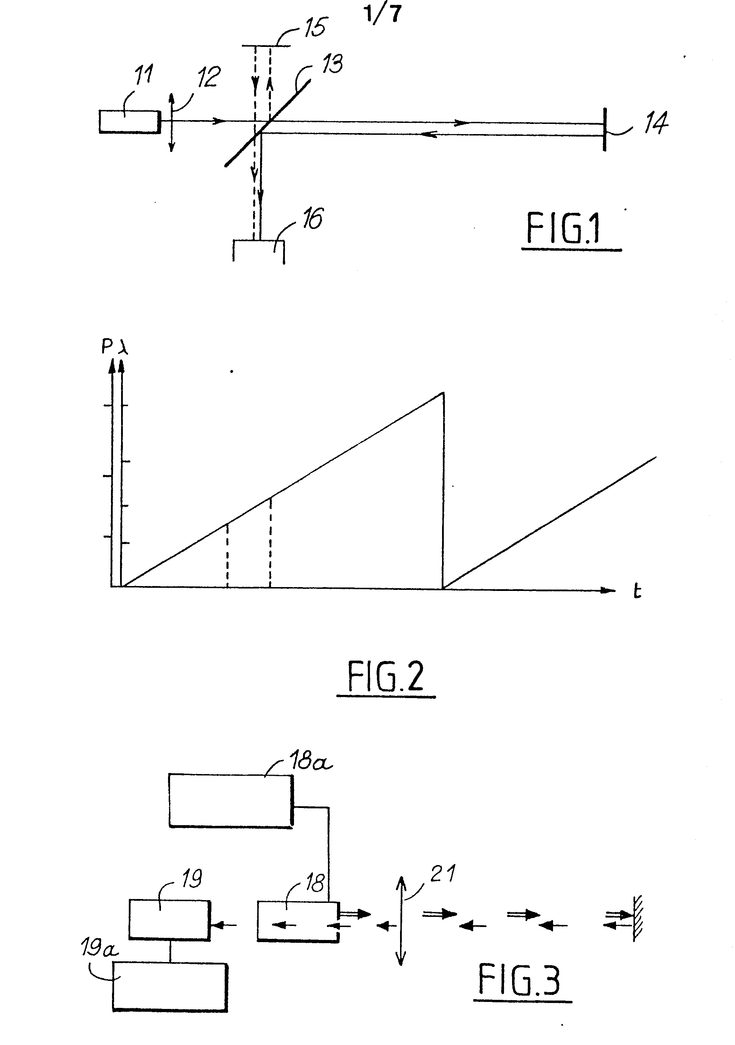

Le vibromètre à diode laser représenté à la Fig.1 comporte une diode laser 11 à la sortie de laquelle est placée une optique de collimation 12. Un miroir semi-réfléchissant 13 est disposé entre l'optique 12 et un miroir 14 formant cible.

Un autre miroir 15 est placé perpendiculairement au trajet de la lumière réfléchie par le miroir

6

semi-réfléchissant 13 de façon à réfléchir à son tour la lumière qu'il reçoit vers un photo-détecteur 16 qui reçoit églement la lumière réfléchie par le miroir 14 et dirigée vers le photo-détecteur par le miroir semi-réfléchissant 13.

Dans le cas de l'utilisation d'une diode laser, le décalage de fréquence peut être réalisé en faisant varier continuellement la fréquence d'émission c'est à dire la longueur d'onde de la lumière émise par celle-ci.

Du fait de la différence des trajets suivis par le faisceau de mesure qui frappe le miroir 14 et le faisceau de référence qui est réfléchi par le miroir 15, les faisceaux qui se mélangent sur le photo-détecteur 16 ont été émis à des instants différents et sont donc à des fréquences différentes.

Dans les diodes lasers, la fréquence de la lumière émise est fortement dépendante du champ électrique appliqué au semi-conducteur qui en fait partie.

La variation de la fréquence d'émission peut donc être simplement obtenue en faisant varier le courant de commande et par conséquent la puissance d'émission de la diode 11.

A titre d'exemple, dans le cas d'une diode laser particulière d'une puissance de 3 mW, une variation de courant entraînant une variation de puissance de l'ordre du milliwatt, provoque une variation de la fréquence d'environ 5 GHz (0,1A ou 0,01 namomètre en longueur d'onde).

En première approximation, la variation de la fréquence lumineuse est proportionnelle à la variation du courant de commande.

Pour obtenir un balayage linéaire de la fréquence des signaux lumineux émis par la diode laser, on utilise des rampes de courant.

Après mélange sur le photo-détecteur entre le signal lumineux de référence et le signal lumineux réfléchi par la cible, le signal recueilli est à une fréquence proportionnelle à la vitesse de balayage de la fréquence lumineuse, à la différence des trajets de mesure et de référence et à la vitesse de déplacement de la cible dans la direction du faisceau de mesure.

Le diagramme de la Fig.2 représente la courbe de la puissance en forme de rampe appliquée à la diode laser et la variation correspondante de la longueur d'onde émise par celle-ci.

Si l'on considère les longueurs d'onde $d_1$ et $d_2$ émises par la diode laser aux instants $t_1$ et $t_2$, l'intervalle de temps est la différence du temps de parcours dans chaque voie.

Un mode de réalisation simplifié du vibromètre à diode laser est représenté à la Fig.3.

A certaines diodes laser est associé une photodiode disposée sur la face arrière du cristal de la diode laser.

La photodiode est destinée initialement à contrôler la puissance d'émission de la diode laser.

Le montage de la Fig.3 utilise une telle association diode laser - photodiode.

Il comporte une diode laser 18 équipée d'une photodiode PIN 19. A la diode laser 18 est connecté un circuit de commande 18a, tandis qu'un circuit de traitement 19a est connecté à la photodiode PIN 19. Les circuits de commande et de traitement seront décrits plus en détail par la suite.

Sur le trajet optique entre la cible 20 et la diode laser 18 est interposée une optique de collimation 21.

8

La diode laser utilisée est par exemple du type CQL 16 RTC de 3 mW qui a l'avantage de disposer d'une optique de collimation produisant un faisceau très faiblement divergent (0,3 mrd) à une longueur d'onde à la limite du visible ($\lambda$ = 780 nm).

La détermination de la forme, de l'amplitude et de la fréquence des rampes de courant de commande de la diode laser est assurée de la façon suivante.

Sachant que la fréquence du signal Doppler $2V/\lambda$ est de l'ordre de 2,5 MHz par m/s, il faut pour pouvoir mesurer des vitesses de quelques décimètres/seconde, disposer d'un décalage initial de fréquence de 1 à 2 MHz.

Le temps du trajet aller-retour de la lumière entre la diode laser et une cible placée à 15 cm de la diode laser est de $10^{-9}$ s.

Pour obtenir un décalage de fréquence de 1 MHz, il faut que la fréquence de la lumière varie de $10^6/10^{-9} = 10^{15}$ Hz/s.

La longueur d'onde du laser varie de 5 GHz par mW. En modulant la puissance de 2 mW, on obtient un décalage de fréquence de l'ordre de 10 GHz.

Etant donné qu'il faut une pente de $10^{15}$ Hz/s, cette variation de puissance devra s'effectuer en

$$10^{10} \text{ Hz}/10^{15} \text{ Hz/s} = 10^{-5}\text{s}$$

ce qui correspond à des rampes de 2 mW à 100 KHz.

Chaque rampe de signal de commande doit donc être constituée d'une dizaine d'alternances du signal à 1 MHz, ce qui doit être suffisant pour mettre en évidence les fluctuations de fréquence dues à l'effet Doppler sur la cible.

On notera qu'il est possible d'augmenter

9

cette fréquence en éloignant la cible.

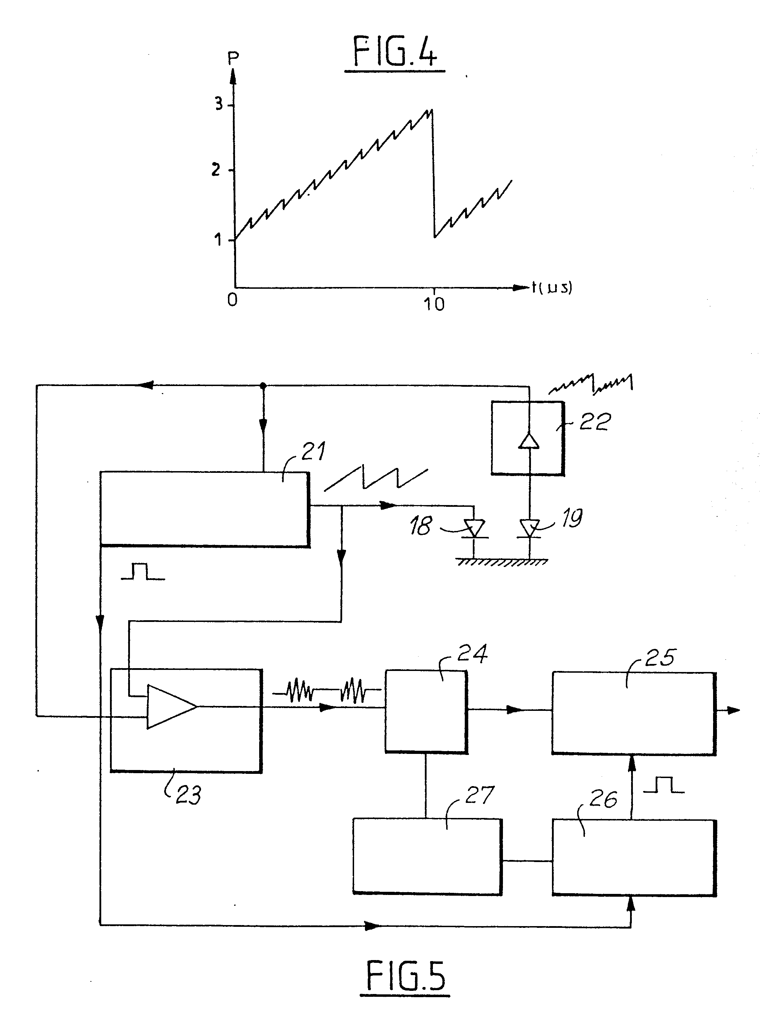

Sur la Fig.4, on a représenté l'allure du signal issu de la photodiode de contrôle 19.

Comme indiqué ci-dessus, ce signal de rampe a une fréquence de 100 KHz et il est modulé par un signal de 1 MHz.

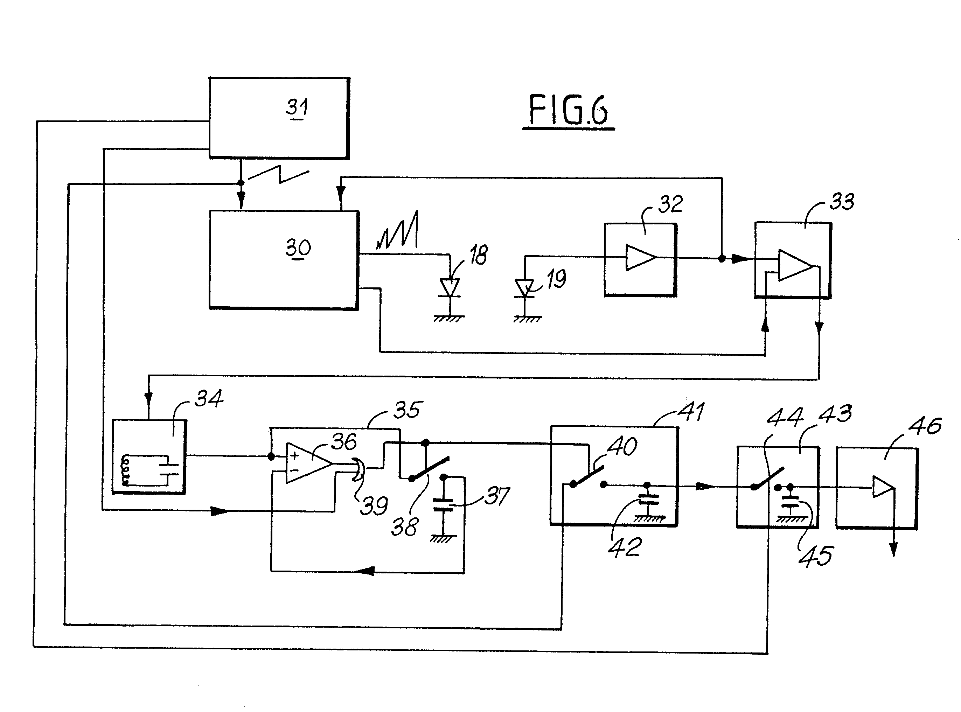

La mise en oeuvre de la modulation du signal de rampe destiné à commander la diode laser est assurée par le circuit de commande 18a de la Fig. 3 représenté en détail à la Fig.5.

Ce montage comporte essentiellement un générateur de rampes 21 dont une sortie est connectée à la diode laser 18.

Cette même sortie du générateur de rampes 21 est connectée à une première entrée d'un filtre 23 dont une seconde entrée est reliée à la sortie de l'amplificateur 22 lui-même connecté à la photodiode de contrôle 19. La sortie du filtre 23 est connectée à un convertisseur fréquence-tension 24 à boucle de verrouillage de phase. La sortie du convertisseur fréquence-tension est reliée à un circuit échantillonneur-bloqueur 25 dont une entrée de commande est connectée à la sortie d'un circuit de contrôle 26 auquel est associé un circuit 27 de contrôle de la boucle de verrouillage de phase.

Le générateur de rampes 21 comporte une autre sortie connectée à une entrée de commande du circuit de contrôle 26.

Le fonctionnement de ce circuit est le suivant. Sous la commande du générateur de rampe 21, la diode laser 18 émet un rayonnement de fréquence variable.

La photo-diode de contrôle 19 reçoit le signal réfléchi par la cible 20 (Fig.3) et délivre un

10

courant de rampe modulé par le décalage de fréquence entre le signal émis par la diode laser et le signal reçu de la cible 20.

Ce signal modulé après amplification par l'amplificateur 22 est appliqué d'une part au générateur de rampes 21 comme signal de stabilisation du point de fonctionnement de la diode laser, et d'autre part au filtre 23 qui reçoit également le signal de rampe sur son autre entrée en opposition de phase avec le signal modulé.

Le filtre délivre des trains de signaux à la fréquence de modulation de la photodiode de contrôle par la lumière réfléchie par la cible et ayant traversé suivant son trajet de retour la cavité de la diode laser 18. Ces signaux sont convertis en tension par le convertisseur fréquence-tension 24 et échantillonnés par le circuit échantillonneur bloqueur 25 qui délivre à sa sortie un signal représentatif de la vitesse de la cible.

Le circuit de contrôle 26 provoque la mémorisation de la tension de sortie au cours des deux dernières microsecondes précédant le transitoire négatif de chaque rampe de courant au cours duquel les signaux ne sont pas exploités. Il reçoit à cet effet un signal de synchronisation du générateur de rampes 21.

Le montage de la Fig.5 est capable de mesurer des vitesses de vibrations de la cible de quelques dizaines de centimètres par seconde à des distances entre la cible et la diode laser comprises entre 20 cm et 2 m.

La fréquence d'échantillonnage du signal de sortie à 100 KHz n'est pas gênante car elle est bien supérieure aux gammes de fréquences habituellement rencontrées en mécanique.

11

Le montage représenté à la Fig.6 est un mode de réalisation du dispositif de l'invention utilisable en télémètre.

Les mesures de distances inférieures à quelques mètres posent de délicats problèmes pour les télémètres classiques.

Ces appareils opèrent soit par mesure du temps de vol d'une impulsion, soit par mesure de l'angle de déphasage d'une modulation d'amplitude appliquée à l'émission. Le temps très court (quelques nanosecondes) qui sépare l'émission de la réception rend très difficile la mesure aux faibles distances.

Il a été établi en liaison avec la description du dispositif représenté aux Fig.3 à 5, que pour une rampe de puissance de 2 mW d'une durée de 10 $\mu$ s, on obtient un signal de 1 MHz sur une cible placée à 15 cm de la diode laser.

La fréquence de ce signal est fonction du temps de parcours de la lumière et croit de façon linéaire avec la distance cible-laser.

Une simple analyse spectrale suffit à donner une bonne approximation de la mesure.

Pour réaliser une mesure de distance, on se propose de faire varier la pente des rampes de puissance appliquées à la diode laser et de récupérer le signal délivré par la diode de contrôle à la suite de la réception de la lumière réfléchie par la cible, à travers un filtre accordé sur une fréquence fixe.

Il suffit alors de repérer la valeur de la pente au moment de la réponse maximale du filtre pour en déduire la distance à mesurer.

Le montage de la Fig.6 comporte un circuit 30 d'asservissement de puissance de la diode laser 18 à une entrée duquel est relié un circuit 31 de comman-

12

de de pente. La photo-diode de contrôle 19 est connectée par l'intermédiaire d'un amplificateur 32 à une entrée d'un filtre 33 dont une autre entrée est con-nectée au circuit d'asservissement 30. La sortie de l'amplificateur 32 est en outre connectée à une entrée de synchronisation du circuit d'asservissement 30.

La sortie du filtre 33 est connectée à l'entrée d'un filtre étroit 34 accordé sur une fréquence fixe et dont la sortie est reliée à un circuit 35 de recherche de maximum de tension.

Le circuit 35 comporte un comparateur 36 dont l'entrée positive est connectée à la sortie du filtre étroit 34 et dont l'entrée négative est reliée à une mémoire analogique constituée par un condensateur 37 dont la borne opposée à la borne reliée au comparateur 36 est reliée à la masse. Un interrupteur 38 est connecté entre ladite borne du condensateur 37 reliée à l'entrée négative du comparateur 36 et l'entrée positive de celui-ci.

La sortie du comparateur 36 est connectée à une entrée d'une porte OU 39 dont l'autre entrée est reliée à une sortie du circuit de commande de pente 31.

La sortie de la porte OU 39 assure la commande de l'interrupteur 38 ainsi que celle d'un interrupteur 40 d'une seconde mémoire analogique 41 comportant un condensateur 42 de mémorisation de la valeur de la pente. L'interrupteur 40 est connecté entre la sortie du circuit de commande de pente 31 reliée au circuit d'asservissement 30 et la borne du condensateur 42 opposée à la masse.

La sortie de la seconde mémoire analogique 40 est reliée à une troisième mémoire analogique 43 constituée d'un interrupteur 44 commandé par le circuit de commande de pente et d'un condensateur 45 branché entre l'interrupteur 44 et la masse.

La sortie de la mémoire analogique 43 est connectée à un inverseur analogique 46 dont la sortie constitue la sortie du montage.

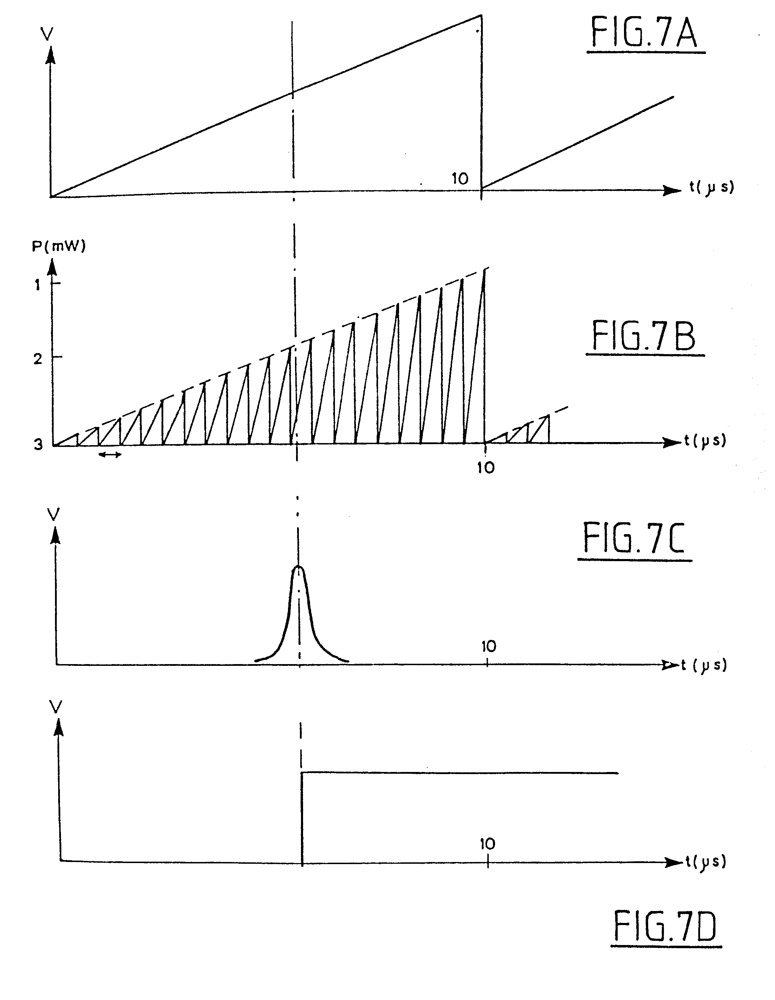

Le fonctionnement du montage de la Fig.7 va être décrit en référence aux Fig.7a à 7d.

La diode laser 18 alimentée par un signal de rampe modulé en puissance dont l'allure est représentée à la Fig.7b et provenant du circuit d'asservissement de puissance 30 qui reçoit un signal de commande de pente représenté à la Fig.7a du circuit de commande de pente 31. Elle émet une lumière dont la fréquence est proportionnelle au courant d'alimentation.

La lumière réfléchie par la cible et revenant dans la diode laser 18 et sa photodiode de contrôle 19 provoque comme dans le cas du montage de la Fig.5, l'émission par la photodiode 19 d'un signal de rampe modulé par un signal correspondant à la différence de fréquence entre la lumière émise et la lumière reçue.

Après amplification dans l'amplificateur 32, ce signal est filtré dans le filtre 33 par combinaison du signal provenant de la photodiode 19, avec le signal de rampe du circuit d'asservissement 30.

Le signal de sortie du filtre 33 est appliqué au filtre étroit 34 qui délivre une impulsion de sortie lorsque la pente des rampes correspond à la distance entre la source 18, 19 et la cible 20 (Fig. 7c). Ce signal est appliqué au circuit 35 de recherche du maximum de tension qui reçoit également le signal de commande de pente.

Le maximum de tension est stocké dans le condensateur 37 et comparé dans le comparateur 36 au

14

maximum de tension suivant. A la fin de chaque rampe, la pente correspondant au maximum de tension est emmagasinée dans la mémoire 41. La valeur de la réponse la plus importante donnant la distance entre la cible et la source à la fin de chaque rampe est transférée à la mémoire 43.

Le signal issu de la mémorisation de la tension de commande de pente au moment du maximum de réponse du filtre 34 évolue comme l'inverse de la distance entre la source et la cible.

L'inverseur analogique 46 émet à sa sortie une tension proportionnelle à la distance mesurée.

Le générateur de rampes de puissance 30 est asservi à un signal en dent de scie de 100 Mz. La durée de ces rampes reste constamment fixée à $10 \mu s$. La profondeur de modulation sera d'autant plus forte que la pente sera plus importante. Il est préférable de générer des rampes de puissance décroissante dans le but de disposer de la puissance maximum du laser pour les faibles pentes correspondant aux distances de mesures plus grandes.

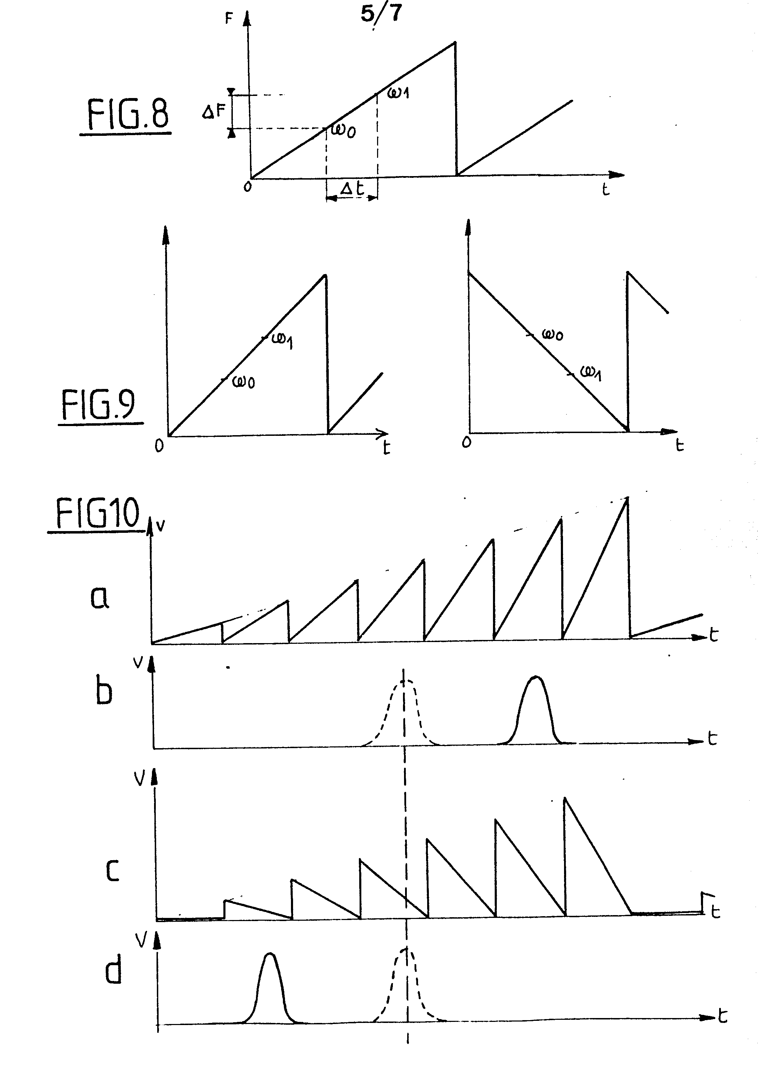

Lors du fonctionnement du dispositif suivant l'invention en télémètre, la fréquence du signal recueilli sur la photodiode 19 est proportionnelle à la pente des variations de fréquence du signal émis par la diode laser, à la distance de mesure et à la vitesse relative entre la cible et la diode laser. L'allure de ce signal est représentée à la Fig. 8.

Le mélange sur le photodétecteur de la lumière émise à l'instant $t_1$ avec celle émise à l'instant to est donnée par la relation :

$$I = \cos \omega 1t . \cos \omega ot$$

Si la fréquence $\omega o$ a été modifiée par l'effet Doppler provoqué par le mouvement de la cible,

15

l'expression $\cos \omega_0 t$ devient $\cos(\omega_0 + \omega_d)t$, de sorte que la relation précédente s'écrit :

$I = \cos \omega_1 t . \cos(\omega_0 + \omega_d)t$

$= \cos(\omega_1 + \omega_0 + \omega_d)t + \cos(\omega_1 - \omega_0 - \omega_d)t$.

Le terme $\cos(\omega_1 + \omega_0 + \omega_d)t$ est à une fréquence trop élevée ($10^{15}$ Mz) pour être transmis par la photodiode.

La fréquence du signal recueilli sera donc de la forme $\cos(\omega_1 - \omega_0 - \omega_d)t$ où $\omega_1 - \omega_0$ représente l'évolution de la fréquence de la source entre l'instant de l'émission de la lumière par la source et l'instant du retour de cette lumière.

$\omega_d$ est la fréquence due à l'effet Doppler et intervient en plus ou en moins suivant le sens de déplacement de la cible.

Dans le cas d'un déplacement continu, la fréquence du signal reçu est la somme algébrique de ces termes.

$\omega_d$ étant constant deux cas se présentent :

$\omega_1 > \omega_0$ ou $\omega_1 < \omega_0$

Ces deux cas correspondent à l'inversion de la pente de modulation des rampes engendrées par le circuit d'asservissement 30 du télémètre de la Fig. 6.

Ils sont représentés à la Fig. 9.

Si on appelle $\omega$ la différence $\omega_1 - \omega_0$, il s'ensuit que pour des pertes inverses de même amplitude, la valeur de $\omega$ reste la même au signe près.

Si on tient compte maintenant du décalage Doppler $\omega_d$, on s'aperçoit que dans le cas de rampes montantes, il s'ajoute à $\omega$ et que, dans le cas de rampes descendantes, il se soustrait de $\omega$.

On dispose donc d'un moyen pour mesurer la vitesse de déplacement de la cible car l'écart de fréquence recueilli entre une rampe montante et une rampe descendante est égal à deux fois la fréquence Doppler.

En outre, la valeur moyenne de ces deux fréquences est représentative de la distance séparant la source de la cible.

Le diagramme de la Fig. 10 montre en (a) un signal modulé par des rampes de modulation montantes correspondant à celui engendré dans le circuit de la Fig. 6.

En (b) on a représenté la réponse du filtre 34 de ce circuit correspondant à la distance entre la source et la cible décalée par rapport à la distance exacte en raison de l'addition de l'effet Doppler, la distance réelle étant représentée par un signal en pointillé.

En (c) on a représenté un signal modulé par des rampes de modulation descendantes.

En (d) on a représenté la réponse du filtre 34 à l'application de rampes de modulation descendantes, cette réponse correspondant à la distance entre la source et la cible décalée par rapport à la distance en raison de la soustraction de l'effet Doppler, la distance réelle étant représentée par le même signal en pointillé qu'en (c).

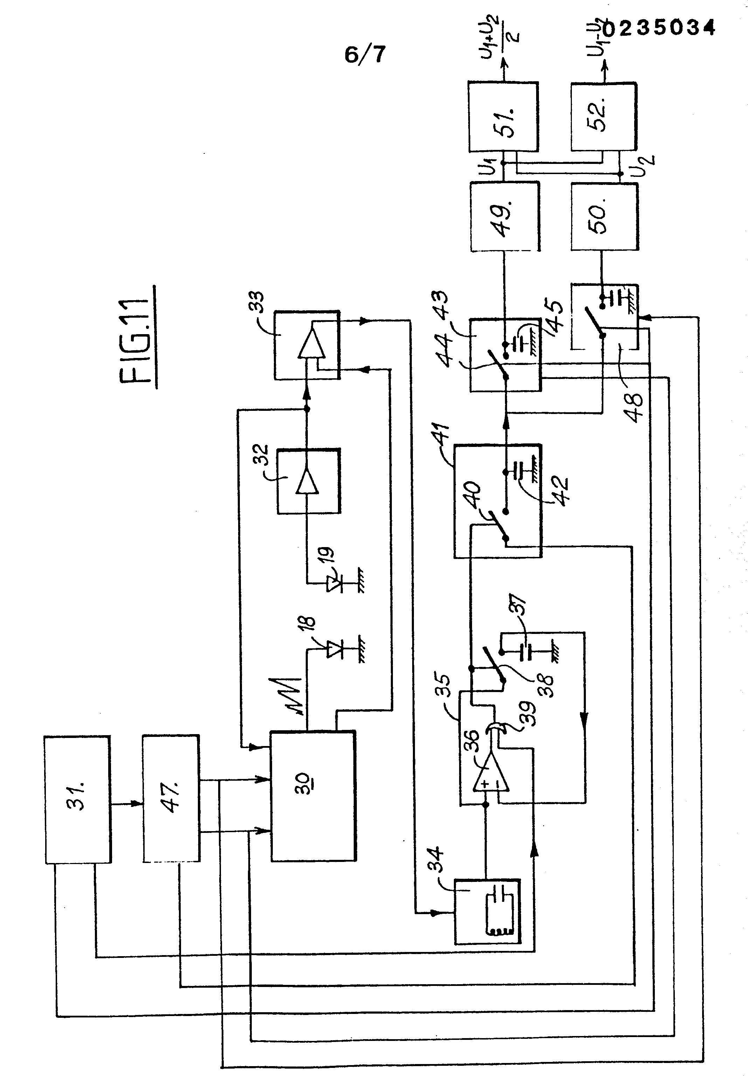

On voit donc que pour déterminer la distance instantanée exacte d'une cible qui se déplace par rapport à une source, il suffit de disposer de deux signaux de réponse résultant chacun de l'application au télémètre de la fig. 6 d'un signal modulé par des rampes ascendantes et d'un signal modulé par des rampes descendantes et de faire la moyenne de ces deux signaux. Le télémètre représenté à la Fig. 11 permet d'obtenir ce résultat.

Ce télémètre diffère de celui de la Fig. 6 en ce qu'il comporte, intercalé entre le circuit de commande de pente 31 et le circuit d'asservissement 30 un commutateur 47 constitué, par exemple, par une bascule destinée à commander à chaque signal en dent de scie émis par le circuit de commande de pente 31, l'émission par le circuit d'asservissement 30 de signaux modulés par des rampes ascendantes et de signaux modulés par des rampes descendantes.

Le commutateur 47 comporte deux sorties reliées, d'une part, au circuit d'asservissement 30 et, d'autre part, à la mémoire analogique 43 de stockage des signaux de réponse du circuit aux signaux modulés par des rampes montantes ainsi qu'à une mémoire analogique supplémentaire 48 de stockage des signaux de réponse du circuit aux signaux modulés par des rampes descendantes. Les sorties des mémoires 43 et 48 sont connectées chacune, à un inverseur analogique 49,50 délivrant des tensions U1 et U2 proportionnelles à la distance. Les tensions U1 et U2 sont sommées dans un additionneur 51 associé à un diviseur par 2 pour obtenir un signal de sortie correspondant à la distance réelle entre la source et la cible.

Ces deux mêmes tensions sont appliquées à un circuit soustracteur 52 dont la tension de sortie U1-U2 est proportionnelle à la vitesse de déplacement de la cible.

Le montage de la Fig. 6 II fonctionne tout à tour sur les signaux modulés par des rampes montantes et descendantes, de la même façon que le circuit de la Fig. 6.

On donne ci-après, à titre d'exemples nullement limitatifs, les dénominations des circuits entrant dans la construction du vibromètre de la Fig. 5 et du télémètre de la Fig. 6.

18

## I - VIBROMETRE

| | |
|---|---|
| Diode laser 18, 19 | CQL 16 de RTC |
| Générateur de rampes 21 | HA 2655 de HARRIS |
| Amplificateurs 22 et 23 | HA 5195 de HARRIS |
| Convertisseur 24 | XR 215 de EXAR |
| Echantillonneur-bloqueur 25 | SHM1C 119 de DATEL |
| Circuit de contrôle 26 | SN 74123 de TEXAS INST. |
| Circuit de contrôle 27 | SN 7474 de TEXAS INST. |

## II - TELEMETRE

| | |
|---|---|
| Circuit d'asservissement 30 | HA 2655 de HARRIS |
| Circuit de commande de pente 31 | HA 2655 de HARRIS |
| Amplificateurs 32 et 33 | HA 5195 de HARRIS |
| Filtre étroit 34 | HA 5195 de HARRIS |
| Comparateur 36 | LM 106 de NATIONAL SEMI-CONDUCTOR |
| Mémoires 41 et 43 | SHM1C 1M. de DATEL |
| Inverseur analogique 46 | 429 de ANALOG DEVICES |

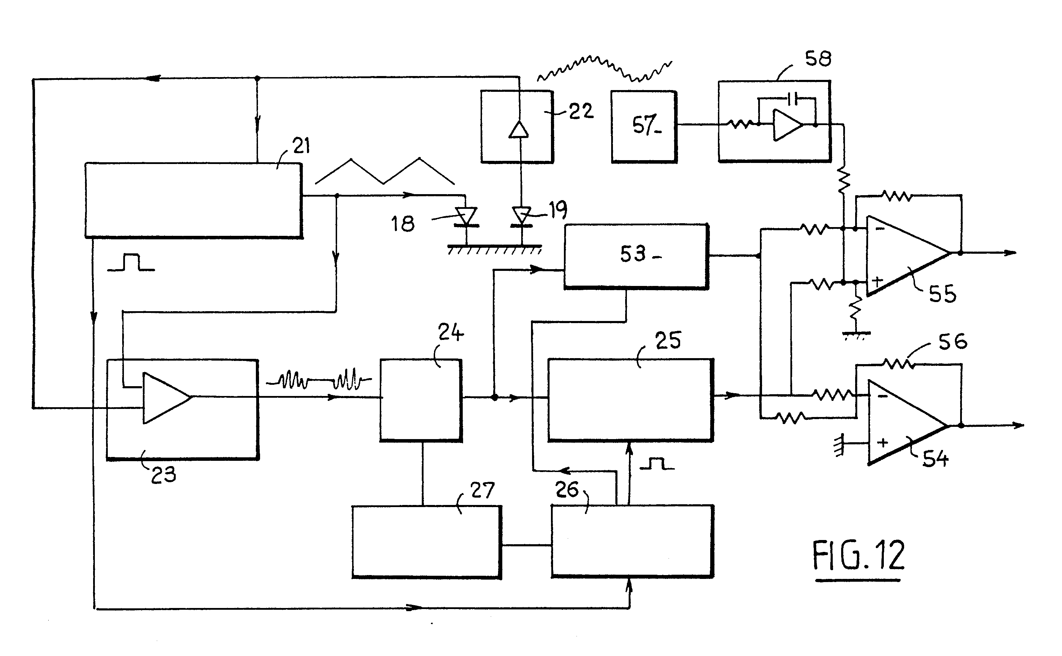

Le circuit représenté à la Fig.12 constitue une évolution du vibromètre représenté à la Fig.5.

Les éléments de ce circuit qui correspondent à ceux du circuit de la Fig.5 sont désignés par les mêmes numéros de référence. Il diffère du circuit de la Fig.5 en ce que son générateur de rampes 21 est un générateur de rampes successivement croissantes et décroissantes. Il comporte en outre des moyens de discrimination entre les informations de distance et de vitesse. Ces moyens de discrimination comprennent un circuit échantillonneur 53 supplémentaire connecté comme l'échantillonneur-bloqueur 25, par une de ses entrées à la sortie du convertisseur fréquence-tension 24 et par son entrée de commande, à la sortie du circuit de contrôle 26.

19

Les sorties des échantillonneurs-bloqueurs 25 et 53 sont connectées respectivement aux entrées négatives d'un circuit additionneur 54 et d'un circuit soustracteur 55.

L'entrée positive du circuit additionneur 54 est connectée à la masse tandis que l'entrée positive du circuit soustracteur 5 est connectée à la sortie de l'échantillonneur-bloqueur 25.

L'entrée négative du circuit additionneur 54 est en outre reliée à la sortie de l'échantillonneur-bloqueur 53.

Une résistance 56 est connectée en parallèle entre l'entrée négative et la sortie du circuit additionneur 54.

L'entrée négative du circuit soustracteur 55 est en outre connectée à la sortie d'un accélérateur 57 lié mécaniquement à la source, par l'intermédiaire d'un circuit intégrateur 58.

Une résistance 59 est connectée en parallèle entre l'entrée négative et la sortie du circuit soustracteur 55.

L'accéléromètre 57 est destiné à mesurer la composante de vibrations de la source dans la direction du faisceau de mesure afin de permettre de s'affranchir de ces vibrations pour mieux mesurer les vibrations de la cible.

Le circuit qui vient d'être décrit en référence à la Fig.12 permet d'appliquer à la source 18 une modulation de puissance de pentes successives positives et négatives.

Le signal délivré par la boucle à verrouillage de phase est alternativement mémorisé par les échantillonneurs-bloqueurs 25 et 53 qui mémorisent l'un les signaux modulés par des signaux de pentes

20

positives et l'autre les ~~signaux modulés par des si~~gnaux de pentes négatives.

La somme des tensions de sortie des échantillonneurs-bloqueurs 25 et 53 ~~réalisée par~~ le circuit additionneur 54 ~~représente la~~ distance entre la source et la cible tandis que la différence entre ces signaux réalisée par le circuit soustracteur 55 représente la vitesse de la cible par rapport à la source.

Les signaux provenant de l'accéléromètre 57 sont transformés par l'intégrateur 58 en signaux de vitesse et soustraits du signal de vitesse par application au circuit soustracteur 55.

Ainsi, le circuit soustracteur 55 délivre un signal de sortie représentatif de la vitesse de la cible débarrassé de la composante de vitesse due aux vibrations de la source.

21

REVENDICATIONS

1. Procédé de mesure optique de la distance entre une cible et un point déterminé, caractérisé en ce qu'il consiste à envoyer vers la cible un rayonnement, de longueur d'onde périodiquement variable, à partir d'une source monomode de lumière cohérente alimentée par un signal de puissance variable, placée audit point, à recueillir le rayonnement rétrodiffusé par la cible, à le réinjecter dans la cavité de la source de lumière et à recueillir sur un photo-détecteur placé à l'arrière de la source le battement entre ce rayonnement rétrodiffusé et le rayonnement issu de la souce, battement dont la fréquence proportionnelle au retard de l'onde rétrodiffusée est représentatif de la distance entre la source et la cible.

2. Dispositif de mesure optique de la distance d'une cible (20) (Fig.3) destiné à la mise en oeuvre du procédé suivant la revendication 1, caractérisé en ce qu'il comprend une souce monomode (18) de lumière cohérente, des moyens (18a, 21, 30) pour faire varier périodiquement la longueur d'onde de la lumière de ladite source, un photo-détecteur (19) destiné à détecter le décalage de longueur d'onde entre la lumière issue de la source (18) et celle rétrodiffusée par la cible (20), et des moyens (23,24,25; 33,34,35; 41,43,46) de traitement du signal de sortie du photo-détecteur (19) correspondant au signal optique composite issu de ladite cavité et résultant de la réinjection dans celle-ci de la lumière rétrodiffusée par la cible (20), la fréquence du signal de sortie du photo-détecteur étant représentative de la distance entre la source (18) et la cible (20).

3. Dispositif de mesure suivant la revendication 1, caractérisé en ce que ladite source monomode de lumière cohérente est une diode laser (18) à laquelle est associée par construction une photodiode PIN (19).

4. Dispositif de mesure suivant l'une des revendications 2 et 3, destiné en outre à mesurer la vitesse d'une cible mobile par rapport à la source par exploitation du décalage de fréquence du à l'effet Doppler du rayonnement rétrodiffusé par la cible mobile qui se superpose au décalage de longueur d'onde du aux variations de la puissance d'alimentation de la source de lumière cohérente, caractérisé en ce que les moyens pour faire varier la longueur d'onde de la lumière de ladite source (18) de lumière cohérente sont constitués par un générateur (21) de rampes destiné à faire varier la longueur d'onde du rayonnement émis par la source (18) et en ce que les moyens de traitement du signal de sortie du photo-détecteur (19) comprennent un filtre (23) dont une première entrée est reliée au photo-détecteur (19) et dont une seconde entrée est reliée à la sortie du générateur de rampes (21), de manière à délivrer à sa sortie des signaux à la fréquence de battement recueillis par le photo-détecteur, un convertisseur fréquence-tension (24) connecté à la sortie dudit filtre (23) et un échantillonneur-bloqueur (25) destiné à délivrer à sa sortie un signal représentatif de la distance et de la vitesse de la cible.

5. Dispositif de mesure suivant l'une des revendications 2 et 3, caractérisé en ce que les moyens pour faire varier la longueur d'onde de la lumière de ladite source (18) de lumière cohérente sont constitués par un circuit d'asservissement de puissance (30) associé à un circuit de commande de pente (31) destiné à appliquer à ladite source (18) un signal de modulation de pente variable et en ce que les moyens pour recueillir sur le photo-détecteur ledit signal composite comprennent un filtre à bande étroite (34) et es moyens (35,41,43,46) de traitement du signal de sortie du filtre et du signal de pente variable pour élaborer la distance entre la cible et la source par combinaison de la réponse en fréquence du filtre avec la valeur de la pente du signal de pente variable à l'instant de la réponse d'amplitude maximale du filtre à bande étroite (34).

6. Dispositif de mesure suivant la revendication 5, caractérisé en ce que lesdits moyens de traitement du signal de sortie du filtre étroit (34) comprennent un circuit (35) de recherche de maximum, de tension commandé par le circuit de commande de pente, des mémoires analogiques (37,38,41,43) de stockage et de transfert de tension correspondant à la pente du signal de commande (40) au moment de la réponse d'amplitude maximale du filtre étroit (34) et un inverseur analogique (46) de conversion du signal de sortie de la dernière desdites mémoires (43) en un signal proportionnel à la distance entre la source (18) et la cible (20).

7. Dispositif de mesure suivant l'une des revendications 5 et 6, caractérisé en ce qu'il comporte en outre des moyens (47) intercalés entre le circuit de commande de pente (31) et le circuit d'asservissement de puissance (30) destinés à commander l'émission par le circuit de puissance (30) de signaux modulés tour à tour par des rampes de modulation montantes et des rampes de modulation descendantes, ledit filtre étroit (34) réagissant tour à tour à des rampes de valeur différentes correspondant à des valeurs de la distance entre la cible (20) et la source (18) res-

24

pectivement augmentée et diminuée par rapport à la distance réelle en raison de la présence dans le signal composite recueilli sur le photo-détecteur (19) d'un signal de fréquence Doppler du au déplacement de la cible (20) par rapport à la source (18) et des moyens (43,48,49,50,51) de détermination de la distance réelle entre la source (18) et la cible (20) par élimination des signaux de fréquence Doppler.

8. Dispositif de mesure suivant la revendication 7, caractérisé en ce qu'il comporte en outre des moyens (52) de détermination de la vitesse de la cible (20) par rapport à la source par soustraction des signaux résultant de la modulation par des rampes de modulation descendantes de ceux résultant de la modulation par des rampes de modulation montantes.

9. Dispositif de mesure suivant la revendication 4, caractérisé en ce que le générateur de rampes (21) est un générateur de rampes de pente de signe constant.

10. Dispositif de mesure suivant la revendication 4, caractérisé en ce que le générateur de rampes (21) est un générateur de rampes successivement croissantes et décroissantes et en ce qu'il comporte en outre un échantillonneur-bloqueur supplémentaire (53) destiné à assurer alternativement avec l'échantillonneur-bloqueur (25) la mémorisation des signaux correspondant à des modulations de puissance de pentes positives et négatives délivrées par le filtre (23) et des moyens de discrimination entre les informations de distance et de vitesse, comprenant un circuit additionneur (54) et un circuit soustracteur (55),le circuit additionneur étant relié par une de ses entrées aux sorties de chacun desdits échantillonneurs-bloqueurs (25,53) tandis que le circuit soustracteur (55)

25

est connecté par une de ses entrées à la sortie de l'un (25) desdits échantillonneurs-bloqueurs et par son autre entrée, à la sortie dudit échantillonneur-bloqueur supplémentaire (53),la sortie du circuit additionneur (54) délivrant un signal correspondant à la distance de la cible à la source, tandis que la sortie du circuit soustracteur délivre un signal correspondant à la vitesse de la cible.

11. Dispositif de mesure suivant la revendication 10, caractérisé en ce qu'il comporte en outre un accéléromètre (57) lié mécaniquement à la source, et connecté à l'une des entrées du circuit soustracteur (55) par l'intermédiaire d'un intégrateur (58) de conversion en signaux de vitesse, des signaux engendrés par l'accéléromètre (57) sous l'effet des vibrations de la source, le signal de sortie du circuit soustracteur correspondant alors à la vitesse de la cible par rapport à la source dont est exclue la composante de vibration de ladite source.

FIG.1

FIG.2

FIG.3

FIG.4

FIG.5

FIG.6

FIG.7A

FIG.7B

FIG.7C

FIG.7D

FIG.8

FIG.9

FIG10

0235034

5/7

0235034

FIG.11

FIG.12

0235034

**Office européen des brevets**

# RAPPORT DE RECHERCHE EUROPEENNE

Numero de la demande

EP 87 40 0367

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| Y | PATENT ABSTRACTS OF JAPAN, vol. 9, no. 199 (P-380)[1922], 16 août 1985; & JP-A-60 64 284 (MATSUSHITA DENKI SANGYO K.K.) 12-04-1985 <br> * Résumé * | 1-3 | G 01 S 17/32 <br> G 01 S 17/58 |
| Y | JOURNAL OF LIGHTWAVE TECHNOLOGY, vol LT-3, no. 5, octobre 1985, pages 1092-1099, IEEE, New York, US; D. WELFORD et al.: "Magnitude and phase characteristics of frequency modulation in directly modulated GaAlAs semiconductor diode lasers" <br> * Page 1092, paragraphe I * | 1-3 | |
| A | US-A-3 811 774 (T.E. HONEYCUTT et al.) <br> * Colonne 1, lignes 6-36; colonne 2, ligne 36 - colonne 4, ligne 60; figures 1,2 * | 4 | **DOMAINES TECHNIQUES RECHERCHES (Int Cl.4)** <br><br> G 01 S <br> H 01 S |
| A | L'ONDE ELECTRIQUE, vol. 51, no. 5, mai 1971, pages 406-410, Paris, FR; J.P. LANDROT: "Radioaltimètre à modulation de fréquence" <br> * En entier * | 5 | |

--- -/-

Le présent rapport de recherche a été établi pour toutes les revendications

| Lieu de la recherche <br> LA HAYE | Date d'achèvement de la recherche <br> 27-05-1987 | Examinateur <br> VAN WEEL E.J.G. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82

| | Office européen | RAPPORT DE RECHERCHE EUROPEENNE | **0235034** |
|---|---|---|---|
| | des brevets | | Numéro de la demande |

EP 87 40 0367

## DOCUMENTS CONSIDERES COMME PERTINENTS

Page  2

| Catégorie | Citation du document avec indication, en cas de besoin, des parties pertinentes | Revendication concernée | CLASSEMENT DE LA DEMANDE (Int Cl 4) |
|---|---|---|---|
| A | GB-A- 601 289 (COSSOR)<br>* Page 2, ligne 33 - page 3, ligne 32; figures 1,2 * | 5,6 | |
| | --- | | |
| A | FR-A-2 161 841 (COMPAGNIE GENERALE D'ELECTRICITE)<br>* Page 3, ligne 30 - page 5, dernière ligne; figures 1,2 * | 7-10 | |
| | --- | | |
| A | EP-A-0 118 342 (THOMSON-CSF)<br>* Abrégé; figure 2 * | 4 | |
| | --- | | |
| A | US-A-3 733 129 (W.B. BRIDGES)<br>* Abrégé; figure 1 * | 1,2 | |
| | ----- | | |
| | | | **DOMAINES TECHNIQUES RECHERCHES (Int. Cl.4)** |

Le présent rapport de recherche a été etabli pour toutes les revendications

| Lieu de la recherche | Date d'achèvement de la recherche | Examinateur |
|---|---|---|
| LA HAYE | 27-05-1987 | VAN WEEL E.J.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82